# FASCICULE DE BREVET EUROPEEN

(11) **EP 1 099 188 B1**
(45) Date de publication et mention de la délivrance du brevet: **16.10.2002**
(21) Numéro de dépôt: 99932919.6
(22) Date de dépôt: 20.07.1999
(51) Int. Cl.: G06K 7/08

(54) **LECTEUR PERFECTIONNE POUR BADGES SANS CONTACT**
VERBESSERTES LESEGERÄT FÜR KONTAKTLOSE ETIKETTEN
IMPROVED CONTACTLESS BADGE READER

(30) Priorité: 21.07.1998 FR 9809295
(43) Date de publication de la demande: 16.05.2001
(73) Titulaire: THALES e-TRANSACTIONS S.A., 78373 Plaisir (FR)
(72) Inventeur: DUBOST, Jean-Pierre, F-78000 Versailles (FR); DUBOCQUET, Etienne, F-28500 Vernouillet (FR); PETIT, Vincent, D-92430 Marne la Coquette (FR)
(74) Mandataire: Plaçais, Jean-Yves
(86) Numéro de dépôt international: FR9901772
(87) Numéro de publication internationale: WO00005676

(56) Documents cités:
- EP-A- 0 253 368
- EP-A- 0 638 871
- EP-A- 0 838 780
- GB-A- 2 237 479

## Description

L'invention concerne un dispositif électronique capable d'interagir sans contact avec des jetons électroniques d'identification et/ou de transaction, jetons que l'on appelle ici génériquement "badges".

On connaît actuellement différents types de badges, de formes variables, utilisables notamment comme moyens d'identification et/ou pour effectuer une transaction. Par "transaction", on entend ici toute opération visant à faire valoir un droit quelconque, qu'il s'agisse d'un droit d'accès physique (péage, par exemple) ou immatériel (accès à l'information), ou encore d'un droit à recevoir et/ou donner un titre quelconque, monétaire ou non, en relation avec une prestation, de quelque nature qu'elle soit.

Les badges les plus répandus actuellement sont les cartes à mémoire, dont la plupart coopèrent avec le lecteur par une connexion électrique. Différentes propositions ont vu le jour, qui tendent à ce que la lecture du badge, et l'écriture sur celui-ci, le cas échéant, s'effectuent sans contact. Mais la diversité même de ces propositions nuit à la standardisation, et par conséquent au développement de ces badges lisibles sans contact, dont l'intérêt pratique est pourtant indéniable.

De plus, en l'absence de contact physique, il survient un risque d'interférence entre plusieurs liaisons sans contact qui coexistent, ou du moins commencent en même temps, par exemple entre deux badges et un même lecteur sans contact, ou encore entre deux badges et deux lecteurs sans contact voisins l'un de l'autre.

Par ailleur, la demande de brevet EP-A-0638871 décrit un dispositif lecteur de badge sans contact ayant les caractéristiques du préambule de la revendication 1.

Il est donc souhaitable de développer un lecteur sans contact qui soit robuste, de faible surcoût, peu sensible aux interférences, et polyvalent, tout en présentant des performances comparables à celles des lecteurs connus.

La Demanderesse s'est trouvée confrontée à ce problème.

La présente invention vient apporter une structure de lecteur sans contact qui est de nature à améliorer sensiblement la situation.

Le lecteur de badge sans contact selon l'invention est défini à la revendication 1.

Avantageusement, le retard de l'organe à retard équivaut sensiblement à un huitième de longueur d'onde de la fréquence porteuse, à un nombre entier de demi-longueurs d'onde près. Dans un mode de réalisation particulier, l'organe à retard comprend un condensateur.

Selon un mode de réalisation préferré de l'invention, le circuit de couplage à l'antenne opère en basse impédance.

D'autres caractéristiques et avantages de l'invention apparaîtront à l'examen de la description détaillée ci-après, ainsi que des dessins annexés, sur lesquels :
- la figure 1 est un schéma fonctionnel général d'un mode de réalisation particulier d'un lecteur de badge sans contact selon l'invention;
- la figure 2 est un schéma plus détaillé du module 52 de la figure 1;
- la figure 3 est un schéma plus détaillé des modules 7, 610 et 620 de la figure 1;
- la figure 4A est un schéma plus détaillé des modules 1 et 2 de la figure 1;
- la figure 4B est un schéma plus détaillé de la figure 4A, et sur laquelle apparaît une variante du bloc de réception, ne comprenant qu'un seul registre de réception;
- les figures 5A et 5B illustrent un exemple préférentiel d'antenne, respectivement en schéma de principe et en schéma d'implantation;
- la figure 6 est un logigramme du fonctionnement d'ensemble du lecteur de badge; et
- la figure 7 est un logigramme des opérations principales confiées au module 2 de la figure 1.

Les dessins annexés comportent de nombreux éléments qui, pour l'essentiel, sont de caractère certain. En conséquence, ils pourront non seulement servir à mieux faire comprendre l'invention, mais aussi contribuer à la définition de celle-ci, le cas échéant.

On décrira maintenant le lecteur, remarque étant faite que ce mot "lecteur" vise le plus souvent un dispositif électronique capable d'interagir avec le badge non seulement pour lire celui-ci, mais aussi pour y écrire des informations.

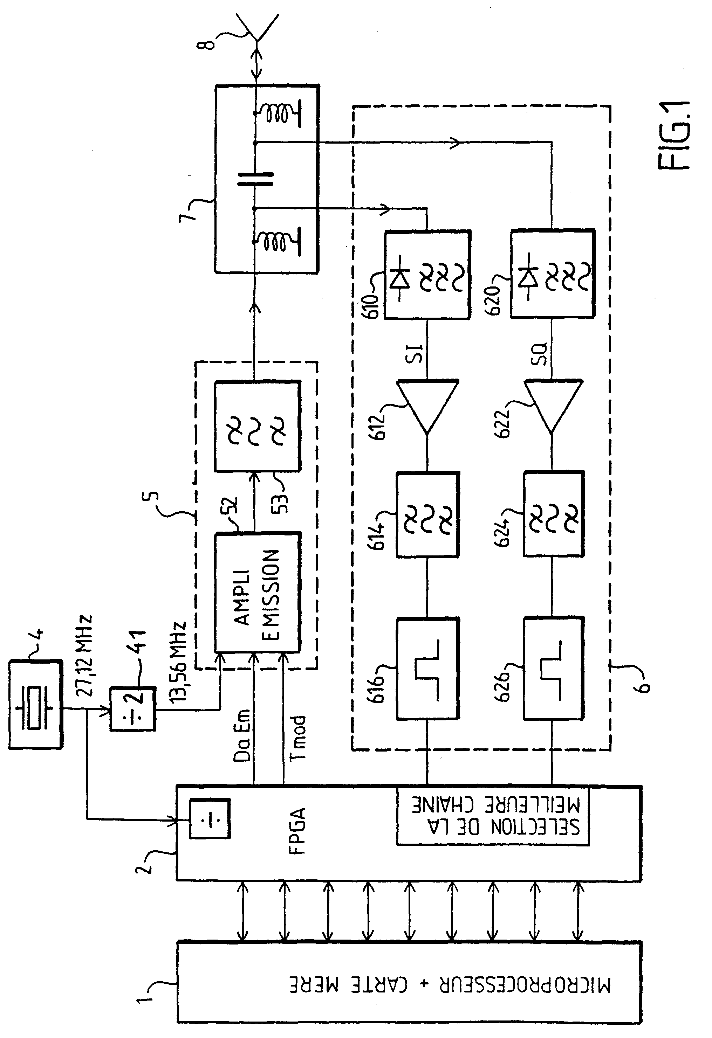

Sur la figure 1, la référence 1 désigne une carte mère munie d'un microprocesseur, et la référence 2 un réseau programmable, qui est ici du type circuit programmable à réseau de portes ("FPGA" pour Field Programmable Gate Array).

La référence 4 désigne un quartz opérant préférentiellement à 27,12 MHz. En 41, il est prévu une division par deux de la fréquence du quartz, ce qui fournit une fréquence de 13,56 MHz.

Dans son ensemble, le circuit d'émission 5 comprend un module amplificateur d'émission 52, qui reçoit des données à émettre DaEm, une commande Tmod qui détermine un type de modulation à effectuer sur DaEm, ainsi que la fréquence de 13,56MHz déjà citée. La sortie de l'amplificateur d'émission 52 est appliquée à un filtre d'émission 53, dont la sortie est reliée à un circuit de couplage 7 vers l'antenne 8.

D'une manière sur laquelle on reviendra plus loin, le circuit de couplage d'antenne 7 fournit deux sorties de réception. Celles-ci sont appliquées aux moyens de réception 6, qui contiennent par conséquent une double chaîne de réception : on voit, en parallèle, les démodulateurs et filtres d'entrée 610 et 620, les amplificateurs de réception 612 et 622, les filtres passe-bande de réception 614 et 624, ainsi que les circuits de mise en forme 616 et 626.

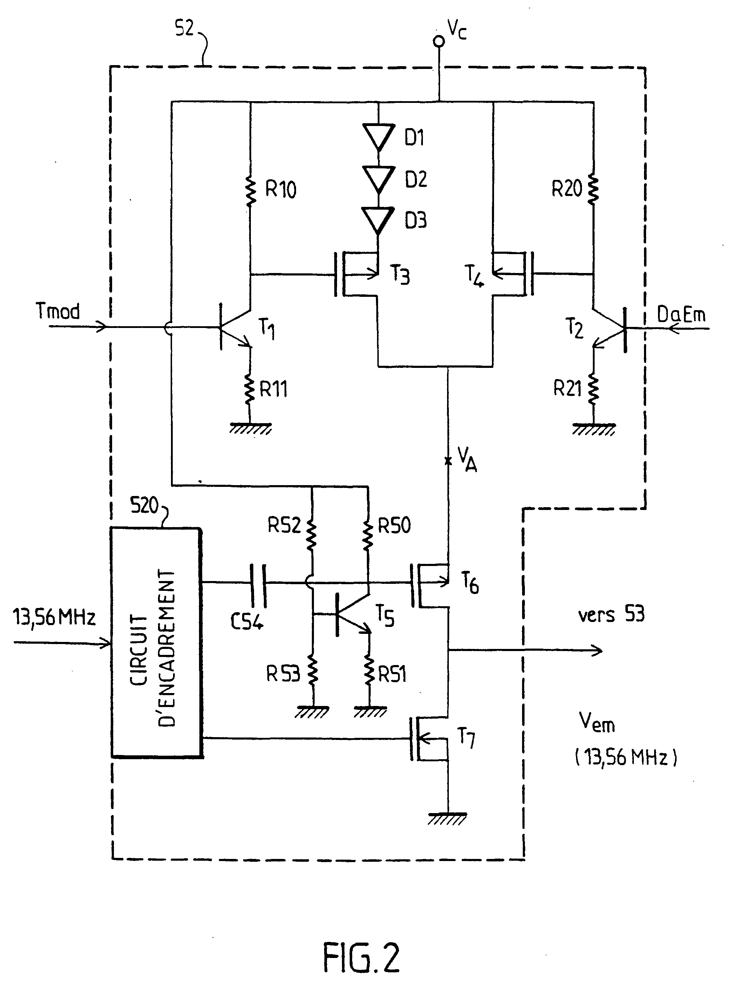

On décrira maintenant l'amplificateur d'émission 52 illustré à la figure 2. Son étage de sortie est constitué de deux transistors à effet de champ 52-T6 et 52-T7, de type opposé, et montés en série, leur point commun fournissant la sortie Vem à 13,56 MHz vers le filtre 53. A partir de la pleine tension d'alimentation Vc, un transistor 52-T5, de type NPN, est muni de résistances de collecteur R50 et d'émetteur 51, ainsi que d'une polarisation de sa base par des résistances R52 et R53. Le collecteur du transistor 52-T5 est relié d'une part à la grille du transistor à effet de champ 52-T6, et d'autre part via un condensateur 52-C54 à un circuit d'encadrement 520, qui reçoit la fréquence porteuse à 13,56 MHz. Chaque fois qu'il passe de 0 à 5 volts, ce signal carré de porteuse à 13,56 MHz va bloquer le transistor 52-T6, et par conséquent débloquer le transistor 52-T7. Réciproquement, tout passage du même signal de 5 volts à 0 volt entraîne la commutation inverse. Le circuit d'encadrement 520 a pour fonction la mise en forme des signaux d'entrée ainsi appliqués aux transistors T6 et T7 de façon à assurer que ces deux transistors T6 et T7 ne soient jamais tous les deux dans l'état conducteur, ce qui pourrait amener leur endommagement, voire leur destruction.

Par conséquent, la tension Vem passe alternativement de 0 volt, pour T6 bloqué et T7 conducteur, à une tension légèrement inférieure à Vc, pour T6 conducteur et T7 bloqué. On obtient ainsi un signal d'amplitude crête à crête pratiquement égale à Vc, en même temps qu'une faible impédance de sortie.

Un signal de commande d'émission est par ailleurs appliqué à la base d'un transistor 52-T2, de type NPN, dont l'émetteur est relié à une résistance R21, elle même connectée à la masse. La résistance de collecteur R20 de 52-T2 pilote la grille d'un transistor à effet de champ 52-T4. Lorsque le transistor 52-T2 est conducteur, le transistor 52-T4 l'est également, et l'on retrouve au point VA une tension proche de Vc, ce qui autorise le fonctionnement précité du circuit d'émission. Au contraire, en absence de données à émettre DaEm, 52-T2 et 52-T4 sont bloqués et la tension en VA est proche de zéro ; le circuit d'émission ne fonctionne pas.

D'une manière semblable, le signal de commande Tmod fait commuter un transistor 52-T1, muni d'une résistance d'émetteur R11 et d'une résistance de collecteur R10. Le collecteur de 52-T1 pilote la grille du transistor à effet de champ 52-T3. La source de 52-T3 est reliée au point Vc par une cascade de diodes 52-D1 à 52-D3, tandis que son drain est relié au point VA.

Le fonctionnement est le suivant : quand le transistor 52-T3 est bloqué, c'est le transistor 52-T4 qui détermine seul la tension VA. Cette tension VA peut être proche de Vc, en présence d'un train de bits à l'entrée DaEm qui détermine l'état du transistor 52-T2. Ainsi, une modulation voisine de 100% ("ASK 100%", pour Amplitude Shift Keying 100%) est obtenue pour la tension Vem.

Quand le transistor 52-T3 est passant, l'état du transistor 52-T4 détermine à nouveau la tension au point VA. Si le transistor 52-T4 est bloqué, la tension VA vaut sensiblement la tension Vc diminuée par la chute de tension qu'entraînent les résistances internes de chaque diode 52-D1, 52-D2 et 52-D3. Cette tension est la valeur minimale (différente de 0) que peut prendre la tension VA. La diminution ou l'augmentation du nombre total de diodes permet d'affiner la valeur de la modulation d'amplitude de Vem. Par contre, lorsque le transistor 52-T4 est passant, le transistor 52-T3 et les diodes 52-D1 à D3 sont court-circuitées, et la tension en VA vaut sensiblement la tension Vc. Ainsi, en présentant un train de bits à l'entrée DaEm, on obtient, au niveau de la tension d'émission Vem, une modulation d'amplitude d'environ 10% dans l'exemple décrit (ASK 10%).

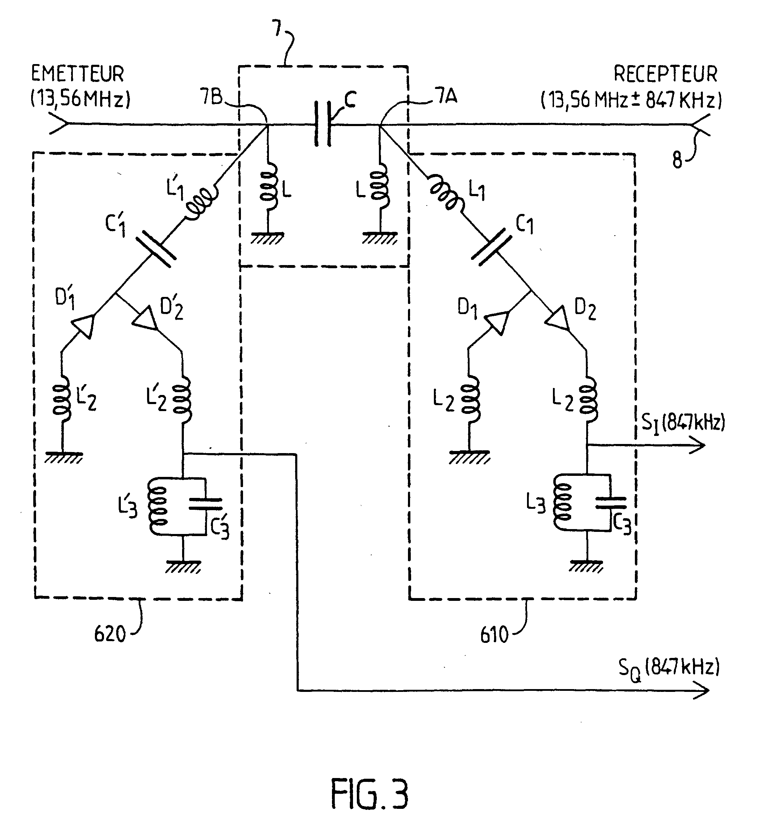

Sur la figure 3, le signal d'émission Vem traverse la cellule 7. Il s'agit d'une cellule en n, constituée d'un condensateur 7-C, avec de part et d'autre en parallèle vers la masse deux inductances de valeur égale 7-L. La sortie va vers l'antenne 8, que l'on décrira maintenant.

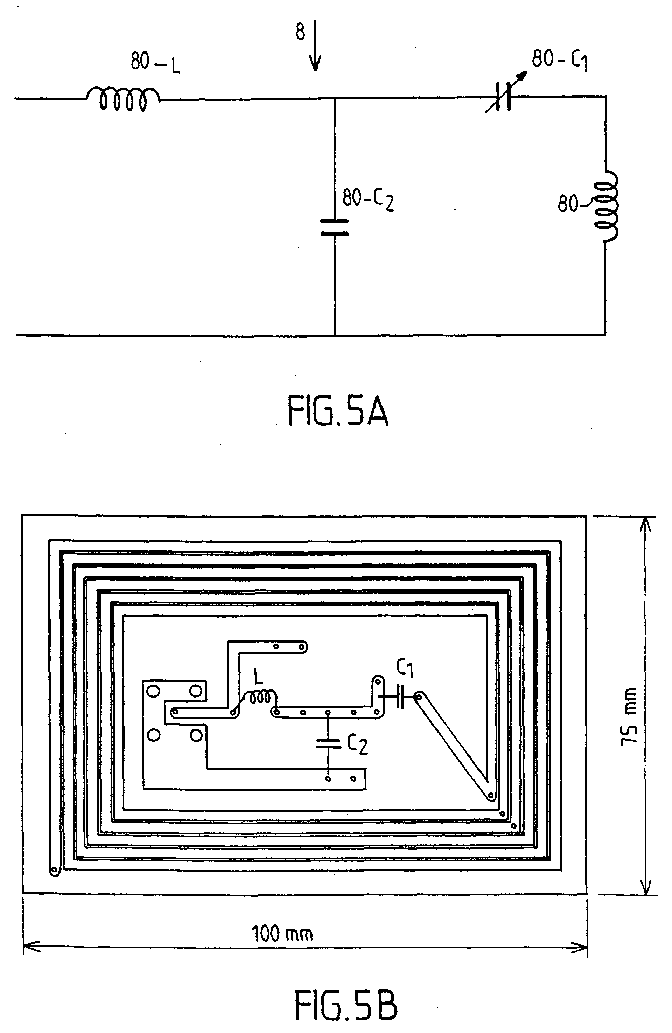

Le schéma de principe de la figure 5A fait apparaître que cette antenne comporte une inductance d'entrée 80-L en série, suivie, en parallèle vers le second fil d'entrée, d'un condensateur 80-C2. Le point commun à 80-L et 80-C2 est relié, à travers un condensateur ajustable 80-C1, à l'élément rayonnant proprement dit, constitué d'une inductance 80.

La figure 5B montre comment cette antenne peut être réalisée par enroulement de six spires gravées sur un circuit imprimé, avec au centre les composants 80-L, 80-C1 et 80-C2. La liaison de retour entre le point libre (en bas) de 80-C2 et l'autre extrémité des spires se situe sur la face opposée du circuit imprimé, et n'est pas visible. Comparativement à d'autres propositions, cette antenne présente l'avantage d'être de très petite taille (100 mm x 75 mm comme indiqué sur la figure 5B), et réalisable sur un circuit imprimé très peu épais, lequel peut être conformé de façon choisie.

En outre, les éléments 80-L, 80-C1 et 80-C2 sont ajustés pour adapter l'antenne à une impédance de travail de 50 Ω.

On mentionnera au passage que le filtre d'émission 53 a pour fonction de base d'éliminer les raies harmoniques présentes dans la sortie en signal sensiblement rectangulaire de l'amplificateur d'émission 52. Selon l'invention, le filtre réalise en plus une adaptation d'impédance entre son entrée, qui est à l'impédance d'environ 10 Ω présentée par l'amplificateur d'émission 52, et, en sortie, l'impédance d'environ 50 Ω présentée par l'antenne 8 avec le circuit de couplage 7. Ce filtre peut être réalisé en composants discrets (inductances et capacités), avec une bande passante suffisamment large pour que les dispersions de fabrication ne dégradent pas les performances. On obtient ainsi une excellente réjection des fréquences harmoniques en même temps qu'un faible coût de production.

En outre, le montage ainsi obtenu permet de ne pas présenter aux signaux reçus sur l'antenne, des impédances complètement réactives. On évite ainsi des phénomènes d'ondes stationnaires perturbateurs à l'intérieur du circuit de couplage 7, ce qui est important comme on le verra maintenant.

A la fréquence de travail, ici de 13,56 MHz, la cellule en π 7 se comporte comme un retard entre les points 7-A et 7-B (compte tenu, si besoin est, des retards propres des longueurs des connexions impliquées). On fait de préférence en sorte qu'à la fréquence de travail, le décalage temporel entre les points 7-A et 7-B corresponde à 1/8ème de longueur d'onde de la fréquence de travail (le cas échéant à un multiple entier d'une demi-longueur d'onde près). En bref, le circuit en π constitué des deux inductances 7-L et du condensateur 7-C est équivalent, aux fréquences proches de 13,56 MHz, à une longueur de ligne d'environ λ/8, tout en présentant une impédance caractéristique de 50 Ω.

Le point 7-A est relié au circuit 610, qui comporte d'abord en série une inductance 610-L1, suivie d'un condensateur 610-C1. On reconnaît ensuite un montage redresseur double alternance: dans un sens, le trajet passe par une diode 610-D1 allant vers la masse via une inductance 610-L2; dans l'autre sens, l'électrode aval du condensateur 610-C1 est reliée à une diode 610-D2, inversée par rapport à 610-D1, et aboutissant à une autre inductance 610-L2 de même valeur que la première.

La borne aval de l'inductance 610-L2 connectée à 610-D2 est reliée à un circuit comprenant en parallèle vers la masse une inductance 610-L3 et un condensateur 610-C3. Ce circuit bouchon "L3-C3" est accordé à 847 kHz, de façon à résonner à cette fréquence, tandis qu'il court-circuite pratiquement les résidus de la fréquence porteuse de 13,56 MHz.

Avantageusement, une telle démodulation des signaux transmis par le badge n'est pratiquement pas perturbée par le fort niveau du signal d'émission, présent pendant la réception. Par ailleurs, la valeur de l'inductance 610-L2 peut être choisie de telle sorte que le circuit de démodulation présente une forte impédance à 13,56 MHz, et par conséquent, n'occasionne pratiquement pas de perte dans les circuits d'émission. En outre, ce circuit permet un préfiltrage de la fréquence porteuse à 13,56 MHz. La sortie notée S_{I} à 847 kHz est prise sur la borne aval de l'inductance 610-L2.

A partir du point 7-B, l'étage 620 est réalisé exactement de la même manière, les éléments qui se correspondent étant distingués par un "prime". En sortie de l'inductance 620-L'2, on trouve un signal SQ à 847 kHz.

L'homme du métier comprendra que les signaux SI et SQ ainsi obtenus correspondent sensiblement à un signal en phase et un signal en quadrature, par rapport à la fréquence porteuse. En effet, du fait du trajet aller et retour à l'émission et à la réception, à la longueur de ligne de λ/8 doublée, correspond λ/4, et par conséquent à deux signaux en phase et en quadrature. L'onde porteuse, disponible en permanence, permet avantageusement d'alimenter à distance le badge et sert d'oscillateur local.

En outre, le circuit série 610-L1, 610-C1 est accordé sensiblement à 13,56 MHz. Il présente par conséquent une haute impédance à 847 kHz, et évite ainsi toute fuite en retour de la fréquence de 847 kHz (signal démodulé) vers le circuit haute fréquence d'émission.

L'amplificateur de réception, qui peut être réalisé de manière connue, est dimensionné pour avoir un gain maximal, tout en faisant en sorte que la tension due au bruit d'entrée demeure à un niveau inférieur au seuil de détection du circuit du module 2. Compte tenu du produit gain X bande passante, on peut utiliser des amplificateurs opérationnels, bi-tension ou mono-tension.

Ensuite, le filtre de réception 614 ou 624 rejette les signaux parasites, en particulier le bruit situé hors bande. Sa bande passante est de 400 kHz. Ainsi, elle est suffisante pour laisser passer une modulation Manchester (± 106 kHz), tout en absorbant les dispersions de fabrication. Comme le filtre d'émission 53, les filtres 614 et 624 peuvent être réalisés en éléments discrets, compte tenu du fait que leur encombrement n'est pas un paramètre critique. L'impédance caractéristique de ces filtres peut être choisie assez élevée, par exemple de l'ordre de 2 kΩ, ce qui évite de charger excessivement les chaînes de réception et par conséquent évite des pertes.

Les circuits de sortie 616 et 626 réalisent une mise en forme, à l'aide d'un trigger de Schmitt et d'un transistor.

Ici, la mise en forme se traduit en sortie par un signal compatible avec la logique TTL, pour être directement applicable au module 2. Un tel montage limite le gain de la chaîne et élimine une partie substantielle du bruit. Le seuil de basculement est préférentiellement déterminé par le niveau de bruit.

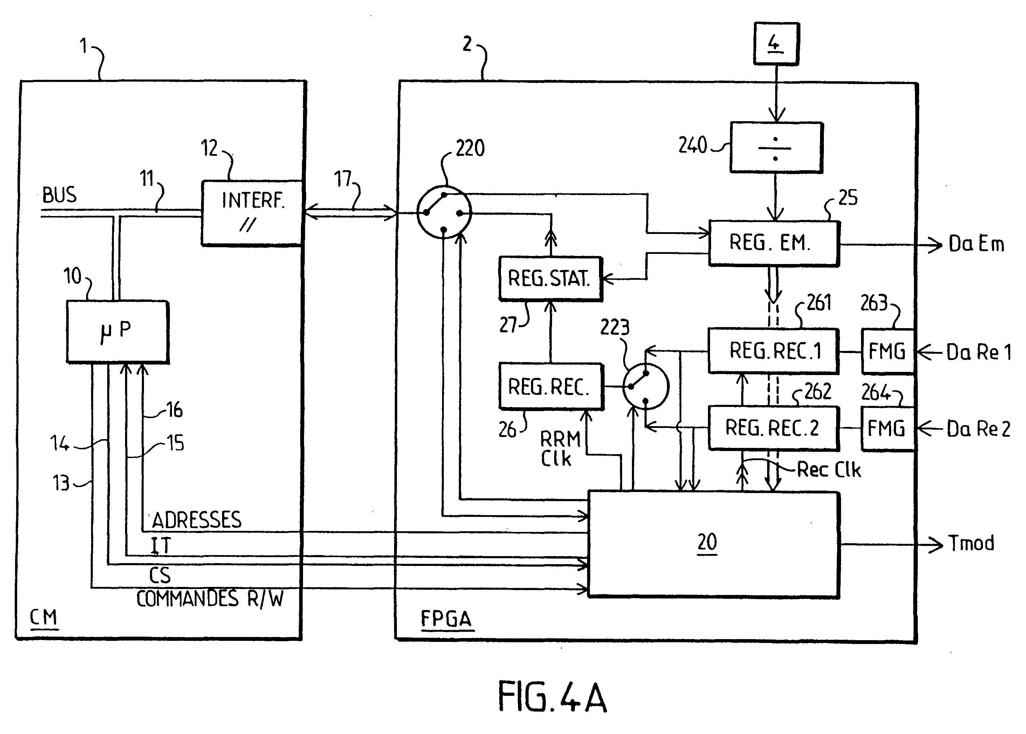

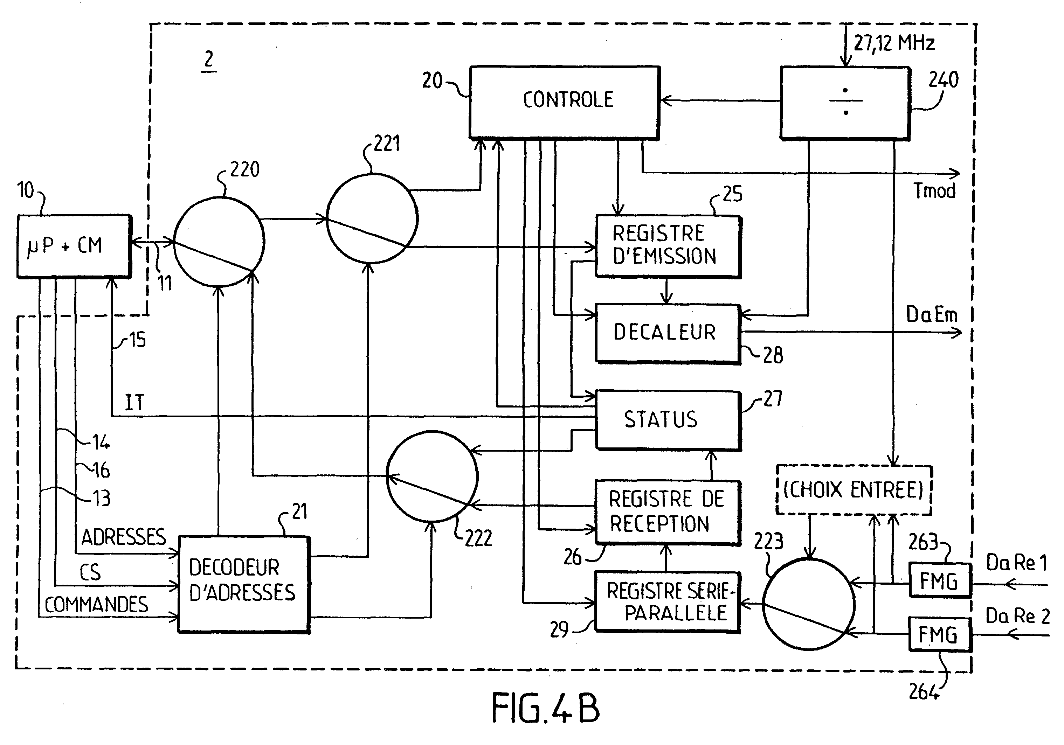

Il est maintenant fait référence à la figure 4A. A gauche, la carte mère 1 (illustrée schématiquement pour ses éléments essentiels) comporte un microprocesseur 10, muni d'un bus 11 avec lequel communique notamment une interface 12 vers un port parallèle. Le microprocesseur 10 (ou un autre organe de la carte) est également de nature à gérer une ligne d'entrée d'interruption (IT) 15, une ligne de sortie 14 vers une sélection de circuit (CS ou "Chip Select"), ainsi que des lignes de commande 13 d'écriture et de lecture (R/W) et d'adresses 16. Le module 1 est réalisable par exemple sous la forme d'une carte mère à base de micro-contrôleur de type INTEL 386 EX. La carte mère CM gère et traite les données, et pilote ainsi le module 2, articulé sur un circuit FPGA, disponible par exemple auprès de la société XILINX, sous la référence XC5206. Le FPGA assure la gestion des phases d'émission et de réception, la synchronisation des signaux et l'extraction des bits en réception.

On décrira maintenant la configuration donnée ici au circuit FPGA. Il comporte tout d'abord un diviseur de fréquence 240 capable d'effectuer différentes divisions de fréquence sur l'horloge à 27,12 MHz provenant du quartz 4. L'une de ces fréquences permet de fournir des données à 106 kBits/s. Les autres fréquences servent à fabriquer des signaux d'horloge à usage interne, sous le contrôle du bloc de fonction 20 que l'on décrira ci-après.

Le module 2 est configuré pour fournir un commutateur 220, dont l'entrée communique par une liaison parallèle bidirectionnelle avec l'interface parallèle 12 du module 1. Le commutateur 220 possède une première sortie vers un registre d'émission 25, qui fournit les données à émettre DaEm, sous le contrôle d'une horloge tirée du circuit 240. Une autre sortie du commutateur 220 est reliée au module de fonction 20 pour charger une requête de commandes et une indication sur le nombre de bits à émettre. Le commutateur 220 communique par ailleurs avec le registre de statuts 27 pour transmettre notamment les débuts et fins d'émission et de réception des données.

Inversement, les deux lignes entrantes DaRe1 en provenance du circuit de mise en forme 616, ainsi que DaRe2 en provenance du circuit de mise en forme 626, sont appliquées à un traitement en 263 et 264, sur lequel on reviendra plus loin, pour remplir respectivement un premier et un second registres de réception 261 et 262. Les contenus des deux registres de réception sont communiqués au module de fonction 20. Les sorties des deux registres de réception sont appliquées à un commutateur 223, qui permet de les utiliser pour remplir lé registre de réception de messages 26. Sous la commande d'une horloge RRMCLK, définie par le module de fonction ou sous son contrôle, le registre 26 peut être déchargé vers le port parallèle 12 du module 1 via le commutateur 220.

En résumé, le module de fonction 20 commande les commutateurs 220 et 223, surveille les contenus des registres 25, 261 et 262, contrôle le contenu du registre 26, pilote les horloges de transmission entre les différents registres ou vers l'extérieur, et transmet enfin la commande d'émission de l'amplificateur d'émission 52. Bien entendu, ces fonctions ne sont pas limitatives.

S'agissant d'un module programmable, l'homme du métier comprendra que les éléments illustrés, qu'il s'agisse des commutations des registres ou des horloges, sont principalement destinés à bien faire comprendre le fonctionnement, mais la réalisation par programme peut être notablement différente de la représentation par registres et circuits, donnée sur la figure 4A.

Le module 20 a encore pour fonction de piloter ou d'assurer la sélection entre les informations reçues par les deux voies de réception, comme on le verra ci-après. Pour l'ensemble de ces opérations, le module 20 reçoit une commande d'excitation (CS) sur la ligne 14, ainsi que des commandes de lecture et d'écriture (R/W) sur la ligne 13, et peut en retour envoyer des interruptions (IT) sur la ligne 15 au microprocesseur 10. Il dialogue avec ce microprocesseur 10 par l'intermédiaire du bus de données 17 bi-directionnel. Les registres du FPGA sont sélectionnés par décodage des adresses (ligne 16) quand la commande CS est activée.

On se réfère maintenant à la figure 4B pour décrire de façon plus détaillée les fonctionnements respectifs des différents registres du FPGA.

Le FPGA comporte en interne un diviseur de fréquence 240 pour diviser la fréquence d'horloge issu du quartz 4 de 27,12 MHz en plusieurs fréquences qu'utilise le FPGA. Une première fréquence de 13,56 Mhz est la fréquence de modulation en émission qui fixe la cadence de fonctionnement du FPGA. La fréquence de 847 kHz assure la comparaison des signaux issus du badge avec un signal de référence, comme on l'a vu précédemment. La fréquence de 53 kHz (106 kBits/s) représente la fréquence d'émission et de réception des trames (ou paquets) de bits en direction du badge ou venant du badge.

Les différents signaux de commande d'écriture et/ou de lecture des registres internes que cadencent les différentes fréquences sont mis en forme par 1e module de contrôle 20.

Globalement, le module 2 dialogue avec la carte micro-contrôleur (CM) à l'aide de signaux de différentes natures. Les signaux d'adresses (ligne 16) permettent de désigner les différents registres d'interface du FPGA (registre d'émission, de réception, de statuts). Les signaux CS permettent au micro-contrôleur de sélectionner le module 2 lors d'un transfert de données. Les signaux de commande (ligne 13) permettent l'écriture et la lecture des registres du FPGA. Le bus bi-directionnel 11 assure la transmission des commandes, des paramètres et des données du micro-contrôleur vers le FPGA. Le bus 11 permet en outre de lire le registre de statuts et les données reçues du FPGA vers le micro-contrôleur.

La lecture et/ou l'écriture des divers registres du module 2 sont décodées à l'aide des signaux d'adresses, de CS et de commande dans le décodeur d'adresses 21. Ils gèrent en outre la position des commutateurs 220, 221 et 222.

Le FPGA envoie le signal DaEm et le signal de commande du type de modulation Tmod (ASK 100%, ASK 10%) vers la chaîne d'émission et reçoit les deux signaux DaRe1 et DaRe2 des deux chaînes de réception. Le module 20 contrôle les registres d'émission, le décaleur 28, le registre de réception 26 et le registre série-parallèle 29. Il pilote les horloges de transmission entre les différents registres, et fournit la commande du type de modulation Tmod. Il est programmé par le micro-contrôleur qui lui impose un mode de fonctionnement en émission ou en réception.

Lorsque le module 20 est programmé en mode d'émission, les données écrites dans le registre d'émission 25 par le micro-contrôleur sont envoyées vers la chaîne d'émission DaEm en traversant le décaleur 28, lui-même cadencé par l'horloge interne à 53 kHz. Un signal d'interruption (IT) est envoyé au micro-contrôleur lorsque celui-ci est prêt à envoyer une donnée suivante au FPGA, ou encore pour lui indiquer la fin d'émission d'une donnée.

Lorsque le module de contrôle 20 est programmé en réception, en présence de deux signaux à recevoir DaRe1 et DaRe2, le commutateur 223, commandé par le module 20 bascule sur l'une ou l'autre des voies de réception 261 et 262. Lorsqu'un nombre de bits correspondant à une largeur de données prédéterminée à transmettre au micro-contrôleur a été acquis, le bloc de contrôle 20 commande le transfert des données au registre de réception 26 et le signal d'interruption IT devient actif pour signaler qu'une donnée peut être lue par le micro-contrôleur.

A chaque instant, le registre de statut 27 indique les événements intervenant dans le FPGA, tels qu'une réception de données, une fin d'émission de données, ou autres. A la réception d'un signal d'interruption IT, le micro-contrôleur lit le contenu du registre de statuts 27 pour décider d'une action suivante à effectuer, par exemple une lecture de données acquises ou de nouvelles données à envoyer.

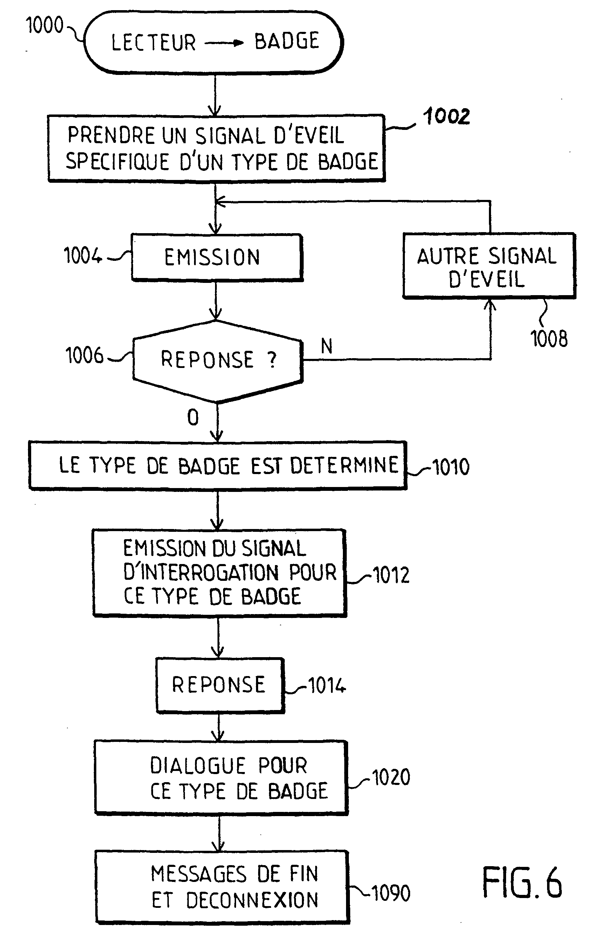

On décrira maintenant le fonctionnement général du dispositif, en référence à la figure 6, sous la forme d'un exemple de dialogue lecteur-badge.

L'étape 1000 marque l'initialisation d'un tel dialogue lecteur-badge, qui commence du côté du lecteur. En permanence, le lecteur va surveiller son environnement, pour chercher à y détecter la présence d'un badge. Cela s'effectue par les opérations 1002 à 1008. En 1002, le lecteur choisit un signal d'éveil spécifique d'un type de badge, ce qui se passe en principe au niveau du module 1. Une commande d'émission est adressée par le module 1 au module 2 pour réaliser l'émission de ce signal d'éveil, qui se trouve alors transféré dans le registre d'émission 25. Si le lecteur ne détecte pas une réponse correcte en 1006, alors l'étape 1008 choisit un autre signal d'éveil, correspondant à un autre type de badge, et l'on forme ainsi une boucle entre les étapes 1004, 1006 et 1008.

A partir de l'étape 1010, le type de badge est déterminé, et le module 1 peut maintenant entamer un dialogue avec ce badge de façon plus classique. Le dialogue commence par l'émission du signal d'interrogation (en principe, un signal d'éveil, prédéterminé pour le type de badge dont il s'agit). Le badge répond en 1014, et se produisent ensuite en 1020 les différentes étapes du dialogue pour ce type de badge, afin d'aboutir enfin au message de fin et de déconnexion. Entre-temps, une opération ou prestation d'un type quelconque a pu être effectuée, par exemple ouvrir une barrière de passage ou de péage, délivrer une somme d'argent, effectuer une transaction commerciale, ou donner simplement accès à des informations protégées.

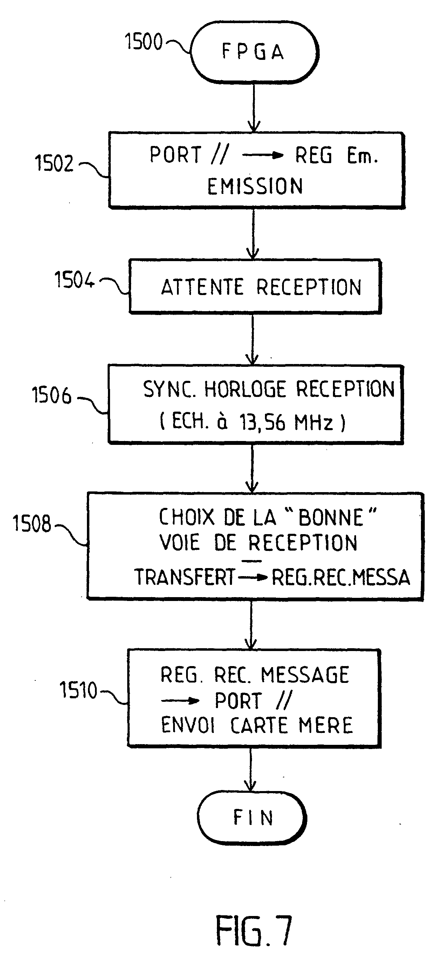

En référence à la figure 7, on décrira maintenant les opérations qui incombent au module 2 ou FPGA, comme indiqué en 1500.

La figure 7 est conçue pour définir ce qui se rapporte à un élément de dialogue comprenant une émission du lecteur et la réponse du badge. Tout d'abord, la carte 1 programme le module 20 en mode "émission", puis les données sont chargées dans le registre d'émission 25. Le module 20 déclenche ensuite l'émission des données chargées. La fin de l'émission provoque une interruption IT pour signaler au module 1 une fin d'émission.

Ainsi, à l'étape 1502, le module de fonction 20 place le commutateur 220 dans la position qui relie l'interface parallèle du module 1 au registre d'émission 25, lequel est rempli par les données provenant de la carte 1. Ensuite, informé par la carte 1 de la fin de cette préparation, le module 2 (plus exactement son "unité de fonctions" 20) commande l'émission.

A l'étape 1504, il est placé en attente d'une réception.

A l'étape 1506, en présence d'un signal reçu du badge, il va réaliser une synchronisation de son horloge de réception, sur laquelle on reviendra.

A l'étape 1508, l'unité de fonction 20 du module 2 va réaliser le choix de la "bonne" voie de réception, en fonction de critères choisis, sur lesquels on reviendra également. Cette opération terminée, on a transféré la totalité du message reçu vers le registre de réception 26, tandis qu'une interruption IT est transmise au module 1 qui doit venir lire le registre de statuts 27 et les données contenues dans le registre de réception 26.

Les différentes fonctions qui incombent à l'unité 20 peuvent être programmées par interrogation d'une table de branchements entrée-sortie, que l'on appelle aussi "table de référence" ("Lookup Table").

La Demanderesse a observé que, si les modalités d'interrogation réponse entre badges sont très diverses, par contre les fréquences de travail utilisées sont en général les mêmes : 13,56 MHz pour la porteuse, et réponses du badge sur une sous-porteuse décalée de 847 kHz. Cette sous-porteuse peut être sujette à une modulation d'amplitude, ou encore à une modulation de phase numérique (BPSK, pour Binary Phase Shift Keying). Cela correspond à la norme 14443C.

Il reste à décrire comment le module 2 assure la réception numérique des signaux.

En effet, en sortie des étages 616 et 626 des deux chaînes de réception, on dispose de signaux en logique TTL, mais dont l'horloge n'est pas connue a priori.

Le module 2 ou FPGA va donc tout d'abord chercher à se synchroniser sur les signaux reçus à 847 kHz. En même temps, il fabrique une horloge de référence à 847 kHz à laquelle il attribue la valeur logique 1. Par exemple, le badge envoie une séquence de plusieurs "1" logiques pour amorcer la synchronisation du lecteur, ce codage pouvant se faire par une modulation de phase numérique. C'est également lors de ces étapes que le FPGA va choisir l'un des deux signaux DaRe1 ou DaRe2, qui présente le meilleur rapport signal/bruit.

Tel que représenté sur la figure 4B, le commutateur 223, commandé par le module de choix d'entrée (représenté en traits pointillés), sélectionne l'un des deux signaux. Cette sélection peut être effectuée par exemple en fonction de la stabilité des signaux échantillonnés à 13,56 MHz (rapport cyclique en présence de modulation). Le module de choix d'entrée prend la décision correspondant à la plus grande probabilité d'occurrence quant à la valeur du bit reçu.

Ainsi, le module 2 échantillonne les signaux reçus sur chacune des deux voies à 13,56 MHz, réalise la moyenne de ces échantillons, et prend une décision, avantageusement sous la forme d'un filtre à moyenne glissante (FMG). Lorsque la qualité de réception est bonne, la moyenne glissante est proche des deux valeurs extrêmes correspondant aux deux bits 1 ou 0. Par contre, lorsque la moyenne glissante est moins bonne, on obtiendra une valeur intermédiaire.

La sélection de la voie de réception peut consister par conséquent à choisir la voie de réception qui, à un instant donné, fournit l'estimation de la valeur du bit la plus stable, ou encore un bit défini par la moyenne glissante la plus "franche" ou, si l'on préfère, la moins douteuse.

Ceci suppose que la décision de sélection entre les sorties des deux chaînes de réception s'effectue bit à bit. Il est bien entendu concevable de la faire d'une façon plus durable, par exemple pour l'intégralité d'un message attendu, ou d'une autre manière. Il est à noter que dans la première variante décrite ci-avant, la sélection de la "bonne" voie (stabilité du signal) a lieu dès le début de la réception.

Au fur et à mesure des décisions sur les bits, le registre de réception 26 (figure 4B) est rempli par les échantillons à 106 Kbits/s. Dans la variante représentée sur la figure 4A, les deux registres de réception 261 et 262 peuvent être remplis, comme déjà indiqué. On peut traiter ainsi de façon séparée le contenu de chaque registre, en fonction des résultats obtenus par filtrage par moyenne glissante décrit ci-avant.

La Demanderesse a observé que beaucoup de problèmes rencontrés dans les systèmes à lecteur de badge sans contact tiennent à des perturbations ou évanouissements que l'on peut rencontrer, particulièrement dans le sens badge-lecteur, pour diverses raisons qui peuvent tenir à la distance entre l'antenne et le circuit de démodulation, au type de modulation qu'emploie le badge, ou à la présence fréquente de masses métalliques, combinée aux mouvements du porteur du badge, ou à d'autres sources de rayonnement au voisinage, tout particulièrement d'autres badges semblables. Sans perturber en aucune manière l'émission, et bénéficiant du faible taux d'ondes stationnaires, l'invention prévoit grâce au moyen de couplage 7 deux chaînes de réception opérant en quadrature. Ceci permet de résoudre la grande majorité des problèmes d'évanouissement précités, en particulier dès lors qu'ils résultent d'interférences électromagnétiques, notamment du fait d'un autre badge.

En outre, le dispositif proposé présente de grands avantages de simplicité et de coût, en même temps que de polyvalence.

Sur un autre plan, la petite taille de son antenne lui permet d'être logé dans une sorte de "niche", ce qui contribue à la protection de ladite antenne vis-à-vis d'influences électromagnétiques indésirables.

Enfin, la séparation fonctionnelle entre le module 1 et le module 2 est intéressante : le module 2 se charge en quelque sorte des fonctions d'intendance en émission-réception. En ce qui concerne le format des messages, l'adaptation à un type de badge et toutes autres caractéristiques correspondant à une souhaitable polyvalence de fonctionnements, il est entièrement piloté par le module 1, qui, articulé sur microprocesseur, est aisément adaptable à toute nouvelle situation rencontrée.

Bien entendu, la présente invention n'est pas limitée au mode de réalisation décrit. Ainsi, on a décrit la sélection de l'une des deux voies de réception, à un instant donné ; on pourrait, en variante ou en complément, fixer la valeur du bit par une combinaison appropriée des sorties de deux voies de réception. On pourrait aussi utiliser plus de deux voies de réception, et/ou plus d'un retard dans le circuit de couplage 7. Bien qu'avantageuses, les valeurs de retard données ne sont pas absolument impératives, et pourraient être modifiées, au moins dans certaines applications.

Par ailleurs, le circuit de couplage en π représenté sur la figure 2 est décrit ci-avant à titre d'exemple. En variante, un circuit en T (avec un dipôle central relié à la masse) peut être aussi utilisé. En outre, le condensateur central C du circuit 7 peut être remplacé par une inductance, tandis que les inductances L de part et d'autre du condensateur, et reliées à la masse, peuvent être remplacées par des condensateurs de valeurs capacitives ajustées.

On peut aussi utiliser des moyens équivalents (actifs ou non) pour les différents filtrages et couplages, pour les chaînes d'émission et de réception, pour l'antenne, et pour les modules 1 et 2.

Ainsi, telle que décrite, l'interaction des modules 1 et 2 permet de décharger l'unité centrale 1 des fonctions d'intendance d'émission/réception, pour lui permettre de se consacrer pleinement à la gestion. Pour certaines applications, on pourra préférer faire réaliser l'ensemble des fonctions des modules 1 et 2 par une seule unité de traitement.

Par ailleurs, de nombreux aspects décrits sont intéressants en eux-mêmes, pour les avantages qui leur sont propres, et ceci indépendamment des autres caractéristiques de l'invention, et notamment du circuit de couplage associé à deux voies de réception.

## Revendications

1. Dispositif lecteur de badge sans contact, comprenant des moyens d'émission (5) et des moyens de réception (6), travaillant sensiblement sur la même fréquence porteuse, et reliés par un circuit de couplage (7) à une antenne (8), ainsi que des moyens de gestion (1,2), qui interagissent avec les moyens d'émission et les moyens de réception pour établir un dialogue avec un badge, **caractérisé en ce que** le circuit (7) de couplage à l'antenne comporte un organe à retard, traversé par la liaison entre les moyens d'émission et l'antenne, **en ce que** les moyens de réception (6) comportent deux voies (61,62), commençant de part et d'autre de cet organe à retard, et **en ce que** les moyens de gestion (1,2) sont agencés pour exploiter sélectivement les voies de réception en fonction d'un critère choisi.

2. Dispositif selon la revendication 1, **caractérisé en ce que** les moyens de gestion (1,2) sont agencés pour sélectionner l'une des voies de réception en fonction d'un critère choisi.

3. Dispositif selon l'une des revendications précédentes, **caractérisé en ce que** le retard du circuit de couplage (7) à l'antenne équivaut sensiblement à un huitième de longueur d'onde de la fréquence porteuse, à un nombre entier de demi-longueurs d'onde près.

4. Dispositif selon l'une des revendications précédentes, **caractérisé en ce que** le circuit de couplage à l'antenne comprend une cellule en π (7).

5. Dispositif selon l'une des revendications précédentes, **caractérisé en ce que** le circuit de couplage (7) à l'antenne opère en basse impédance.

6. Dispositif selon l'une des revendications précédentes, **caractérisé en ce que** l'antenne (8) est formée d'une inductance gravée sur circuit imprimé.

7. Dispositif selon l'une des revendications précédentes, **caractérisé en ce que** les moyens d'émission (5) comprennent un modulateur (51), un amplificateur d'émission (52) et un filtre d'émission (53), **en ce que** l'amplificateur d'émission (52) est agencé avec une impédance de sortie inférieure à celle du circuit de couplage à l'antenne, et **en ce que** le filtre d'émission (53) est réalisé en composants passifs.

8. Dispositif selon l'une des revendications précédentes, **caractérisé en ce que** chaque voie de réception commence par un démodulateur d'amplitude capable d'opérer sur le signal reçu en présence du signal émis de fort niveau, suivi d'un préfiltrage de réjection de porteuse (610,620).

9. Dispositif selon la revendication 8, **caractérisé en ce que** les démodulateurs d'amplitude (610,620) opèrent en double alternance.

10. Dispositif selon l'une des revendications précédentes, **caractérisé en ce que** les moyens de gestion (1,2) comportent une unité de commande à microprocesseur (1) munie d'un port parallèle, et un réseau programmable (2), configuré avec d'une part un registre d'émission et un registre de message reçu connectables sélectivement audit port parallèle, d'une autre part deux registres de réception connectables sélectivement au registre de message reçu, et d'autre part enfin un module de fonctions agencé pour commander l'émission, la réception et lesdites commutations, et interconnecté pour dialoguer avec l'unité de commande à microprocesseur, en particulier en mode interruption (IT) et appel de circuit (CS), à propos des messages émis et reçus.

11. Dispositif selon la revendication 10, **caractérisé en ce que** l'unité de commande à microprocesseur (1) est agencée pour gérer des formats spécifiques d'émission et de réception, y compris le cas échéant des codes de redondance et/ou des bits de service.

12. Dispositif selon l'une des revendications 10 et 11, **caractérisé en ce que** le réseau programmable (2) est agencé pour échantillonner les signaux reçus à haute fréquence, et pour décider à chaque fois de la valeur du bit.

13. Dispositif selon la revendication 12, **caractérisé en ce que** le réseau programmable (2) est agencé pour décider de la valeur du bit par un filtrage à moyenne glissante.

14. Dispositif selon l'une des revendications précédentes, **caractérisé en ce que** le critère choisi comprend la sélection du plus stable des signaux reçus.

## Patentansprüche

1. Kontaktloses Etikettenlesegerät, enthaltend Sendeeinrichtungen (5) und Empfangseinrichtungen (6), die im wesentlichen auf der gleichen Trägerfrequenz arbeiten und die über eine Kopplungsschaltung (7) mit einer Antenne (8) sowie mit Verwaltungseinrichtungen (1, 2) verbunden sind, die mit den Sendeeinrichtungen und den Empfangseinrichtungen zusammenwirken, um einen Dialog mit dem Etikett einzurichten, **dadurch gekennzeichnet, daß** die Kopplungsschaltung (7) zur Antenne eine Verzögerungseinrichtung enthält, die von der Verbindung zwischen den Sendeeinrichtungen und der Antenne durchquert wird, und daß die Empfangseinrichtungen (6) zwei Zweige (61, 62) enthalten, die beiderseits dieser Verzögerungseinrichtung beginnen, und daß die Verwaltungseinrichtungen (1, 2) dazu eingerichtet sind, die Empfangszweige in Abhängigkeit von einem gewählten Kriterium selektiv auszuwerten.

2. Gerät nach Anspruch 1, **dadurch gekennzeichnet, daß** die Verwaltungseinrichtungen (1, 2) dazu eingerichtet sind, einen der Empfangszweige in Abhängigkeit eines gewählten Kriteriums auszuwählen.

3. Gerät nach einem der vorhergehenden Ansprüche, **dadurch gekennzeichnet; daß** die Verzögerung der Kopplungsschaltung (7) zur Antenne im wesentlichen einem Achtel der Wellenlänge der Trägerfrequenz entspricht, gegebenenfalls einem ganzzahligen Vielfachen der halben Länge der Nahwelle.

4. Gerät nach einem der vorhergehenden Ansprüche, **dadurch gekennzeichnet, daß** die Kopplungsschaltung zur Antenne ein π-Glied (7) enthält.

5. Vorrichtung nach einem der vorhergehenden Ansprüche, **dadurch gekennzeichnet, daß** die Kopplungsschaltung (7) zur Antenne mit niedriger Impedanz arbeitet.

6. Gerät nach einem der vorhergehenden Ansprüche, **dadurch gekennzeichnet, daß** die Antenne (8) von einer Spule gebildet ist, die auf einer Druckschaltkarte ausgebildet ist.

7. Vorrichtung nach einem der vorhergehenden Ansprüche, **dadurch gekennzeichnet, daß** die Sendeeinrichtungen (5) einen Modulator (51), einen Sendeverstärker (52) und ein Sendefilter (53) enthalten, daß der Sendeverstärker (52) mit einer Ausgangsimpedanz versehen ist, die kleiner als jene der Antennenkopplungsschaltung ist, und daß das Sendefilter (53) aus passiven Bauelementen besteht.

8. Gerät nach einem der vorhergehenden Ansprüche, **dadurch gekennzeichnet, daß** jeder Empfangszweig mit einem Amplitudendemodulator beginnt, der in der Lage ist, das Empfangssignal in Anwesenheit des Sendesignals hohen Pegels zu verarbeiten, gefolgt von einer Vorfilterung zum Sperren des Trägers (610, 620).

9. Gerät nach Anspruch 8, **dadurch gekennzeichnet, daß** die Amplitudendemodulatoren (610, 620) mit beiden Halbwellen arbeiten.

10. Gerät nach einem der vorhergehenden Ansprüche, **dadurch gekennzeichnet, daß** die Verwaltungseinrichtungen (1, 2) eine Mikroprozessor-Steuereinheit, die mit einem Parallelanschluß versehen ist, und ein programmierbares Netzwerk (2) enthalten, das einesteils mit einem Senderegister und einem Empfangsmitteilungsregister versehen, ist, die wahlweise mit dem Parallelanschluß verbindbar sind, und anderenteils mit zwei Empfangsregistern versehen ist, die selektiv mit dem Empfangsmitteilungsregister verbindbar sind, und anderenteils schließlich mit einem Funktionsmodul versehen ist, das dazu eingerichtet ist, die Sendung, den Empfang und die genannten Umschaltungen zu befehlen, und das für den Dialog mit der Mikroprozessor-Steuereinheit angeschlossen ist, insbesondere in einem Unterbrecherbetrieb (IT) und zur Abfrage der Schaltung (CS) bezüglich gesendeter und empfangener Mitteilungen.

11. Gerät nach Anspruch 10, **dadurch gekennzeichnet, daß** die Mikroprozessor-Steuereinheit (11) dazu eingerichtet ist, spezifische Sende- und Empfangsformate zu erzeugen, einschließlich gegebenenfalls von Redundanzcodes und/oder Service-Bits.

12. Gerät nach einem der Ansprüche 10 und 11, **dadurch gekennzeichnet, daß** das programmierbare Netzwerk (2) dazu eingerichtet ist, die Hochfrequenzempfangssignale abzutasten und jedesmal den Wert des Bits zu entscheiden.

13. Gerät nach Anspruch 12, **dadurch gekennzeichnet, daß** das programmierbare Netzwerk (2) dazu eingerichtet ist, den Bitwert durch eine Filterung mit gleitendem Mittelwert zu entscheiden.

14. Gerät nach einem der vorhergehenden Ansprüche, **dadurch gekennzeichnet, daß** das gewählte Kriterium die stabilste Auswahl der empfangenen Signale umfaßt.

## Claims

1. Contactless tag reader device, comprising transmission means (5) and reception means (6), working on substantially the same carrier frequency, and linked by a coupling circuit (7) to an antenna (8), as well as management means (1, 2), which interact with the transmission means and the reception means so as to establish a dialogue with a tag, **characterized in that** the circuit (7) for coupling to the antenna comprises a delay entity, through which the link between the transmission means and the antenna passes, **in that** the reception means (6) comprise two pathways (61, 62), beginning either side of this delay entity, and **in that** the management means (1, 2) are designed to utilize the reception pathways selectively as a function of a chosen criterion.

2. Device according to Claim 1, **characterized in that** the management means (1, 2) are designed to select one of the reception pathways as a function of a chosen criterion.

3. Device according to one of the preceding claims, **characterized in that** the delay of the circuit (7) for coupling to the antenna is substantially equivalent to an eighth of the wavelength of the carrier frequency, to within an integer number of half-wavelengths.

4. Device according to one of the preceding claims, **characterized in that** the circuit for coupling to the antenna comprises a π cell (7).

5. Device according to one of the preceding claims, **characterized in that** the circuit (7) for coupling to the antenna operates at low impedance.

6. Device according to one of the preceding claims, **characterized in that** the antenna (8) is formed of an inductor etched on a printed circuit.

7. Device according to one of the preceding claims, **characterized in that** the transmission means (5) comprise a modulator (51), a transmission amplifier (52) and a transmission filter (53), **in that** the transmission amplifier (52) is designed with a lower output impedance than that of the circuit for coupling to the antenna, and **in that** the transmission filter (53) is made of passive components.

8. Device according to one of the preceding claims, **characterized in that** each reception pathway begins with an amplitude demodulator capable of operating on the signal received in the presence of the transmitted signal of high level, followed by a carrier rejection prefiltering (610, 620).

9. Device according to Claim 8, **characterized in that** the amplitude demodulators (610, 620) operate in full-wave mode.

10. Device according to one of the preceding claims, **characterized in that** the management means (1, 2) comprise a microprocessor-based control unit (1) furnished with a parallel port, and a programmable array (2), configured with on the one hand a transmission register and a received message register which are selectively connectable to the said parallel port, on the other hand two reception registers selectively connectable to the received message register, and moreover finally a functions module designed to control the transmission, the reception and the said switchings, and interconnected so as to carry out a dialogue with the microprocessor-based control unit, in particular in interrupt mode (IT) and circuit call (CS) mode, with regard to the messages transmitted and received.

11. Device according to Claim 10, **characterized in that** the microprocessor-based control unit (1) is designed to manage specific transmission and reception formats, including, if appropriate, redundancy codes and/or service bits.

12. Device according to one of Claims 10 and 11, **characterized in that** the programmable array (2) is designed to sample the signals received at high frequency, and to decide each time on the value of the bit.

13. Device according to Claim 12, **characterized in that** the programmable array (2) is designed to decide on the value of the bit through a sliding-average filtering.

14. Device according to one of the preceding claims, **characterized in that** the chosen criterion comprises the selection of the most stable of the signals received.
